# EUROPEAN PATENT SPECIFICATION

(11) **EP 4 318 642 B1**
(45) Date of publication and mention of the grant of the patent: **24.06.2026**
(21) Application number: 23179326.6
(22) Date of filing: 14.06.2023
(51) Int. Cl.: H01M 4/131, H01M 4/52, C01G 49/00, C01F 17/36, H01M 10/05, H01M 10/36, H01M 10/0562, H01M 4/02

(54) **FLUORIDE ION BATTERY**
FLUORIDIONENBATTERIE
BATTERIE À IONS FLUORURE

(30) Priority: 05.08.2022 JP 2022125517
(43) Date of publication of application: 07.02.2024
(73) Proprietor: Nichia Corporation, Anan-shi, Tokushima 774-8601 (JP)
(72) Inventor: Kashihara, Kodai, Anan-shi, Tokushima 774-8601 (JP)
(74) Representative: Vossius & Partner Patentanwälte Rechtsanwälte mbB

(56) References cited:
- US-A1- 2017 237 067
- US-A1- 2018 316 012
- US-A1- 2020 255 296
- VASALA SAMI ET AL: "Reversible Tuning of Magnetization in a Ferromagnetic Ruddlesden-Popper-Type Manganite by Electrochemical Fluoride-Ion Intercalation", vol. 6, no. 2, 13 December 2019 (2019-12-13), pages 1 - 9, XP093112032, ISSN: 2199-160X, Retrieved from the Internet <URL:https://onlinelibrary.wiley.com/doi/full-xml/10.1002/aelm.201900974> DOI: 10.1002/aelm.201900974

## Description

### CROSS-REFERENCE TO RELATED APPLICATIONS

This application claims priority to Japanese Patent Application No. 2022-125517, filed on August 5, 2022.

### BACKGROUND

### Field of the Invention

The present disclosure relates to an electrode active material for a fluoride ion battery, an electrode for a fluoride ion battery, and a fluoride ion battery.

A lithium ion battery has been known as a secondary battery having a high energy density. A fluoride ion battery has been proposed as a battery capable of achieving an energy density that is higher than that of the lithium ion battery. For example, JP2017-143044A proposes an active material that has a layered perovskite structure and that has a crystal phase having a specific composition.

Further examples of fluoride ion batteries comprising complex oxides are known from US 2018/316012 A1 and US 2017/237067 A1 comprising La_{1.2}Sr_{1.8}Mn₂O₇F₂ as cathode active material.

US 2020/255296 A1 discloses an electrode comprising Sr₂Fe₂GeO₇ having a melilite structure as positive-electrode catalyst in a metal-air battery.

### SUMMARY

The present invention refers to a fluoride ion battery as defined in claim 1. Preferred embodiments are referred to in the dependent claims.

### BRIEF DESCRIPTION OF THE DRAWINGS

Fig. 1 shows an exemplary of X-ray diffraction pattern of a complex oxide according to Example.
Fig. 2 shows an exemplary of a charge / discharge profile of a battery for evaluation.

### DETAILED DESCRIPTION

The term "step" as used herein includes not only an independent step but also a step not clearly distinguishable from another step as long as the intended purpose of the step is achieved in the step. If a plurality of substances correspond to a component in a composition, the content of the component in the composition means the total amount of the plurality of substances present in the composition unless otherwise specified. Certain embodiments of the present disclosure will now be described in detail. It should be noted that the embodiments described below are exemplifications of an electrode active material for fluoride ion battery, an electrode for a fluoride ion battery, and a fluoride ion battery for embodying the technical ideas of the present disclosure, and the present disclosure is not limited to the electrode active material for fluoride ion battery, the electrode for a fluoride ion battery, and the fluoride ion battery described below.

### Electrode Active Material for Fluoride Ion Battery

An electrode active material for a fluoride ion battery (hereinafter, also referred to simply as "electrode active material") includes a complex oxide that includes a melilite-type crystal structure. Many of the known electrode active materials each for a fluoride ion battery are each a metal active material, and each work as an active material by a fluorination-defluorination reaction of a metal thereof. The fluorination-defluorination reaction of a metal is a reaction associated with a significant change of the crystal structure thereof, and the volumetric change thereof is significant. Due to the above, overpotential thereof tends to be high, and the cycle performance and the rate capability thereof tend to be poor. On the other hand, a compound having a layered crystal structure works as an active material by intercalation and deintercalation of carrier ions into/from interlayer spaces. Small volumetric change due to the fact that the crystal structure of the active material does not change, reduction of overpotential, and improvement of each of the cycle performance, the rate capability, and the like may be expected. The complex oxide having the melilite-type crystal structure also has a layered structure and may therefore be expected to have the above advantages.

Complex oxides each including the melilite-type crystal structure each generally have a theoretical composition represented by, for example, M¹₂M²₃X₇. M¹ represents an alkali metal, an alkali earth metal, lanthanoid, or the like. M² represents a transition metal, Al, Si, Zn, Ge, or the like. X represents O, N, F, S, Cl, or the like. In the melilite-type crystal structure, M²-X₄ tetrahedra form a two-dimensional network structure and form a layered structure sandwiching an M¹ site therebetween. As to the composition and the like of the melilite-type crystal structure, for example, WO2019-065285 can be referred to. With the melilite-type crystal structure, an excellent cycle performance, an excellent rate capability, and the like caused by the two-dimensional diffusion of the fluoride ions are expected. An increase of the capacity caused by the redox reaction of anions each coordinated to an M² site is also expected.

The complex oxide including the melilite-type crystal structure according to the present disclosure (hereinafter, also referred to simply as "complex oxide") may include, in the composition thereof, a first metal atom that includes at least one type selected from a first metal atom group, a second metal atom that includes at least one type selected from a second metal atom group, and a specific non-metal atom that includes at least one type selected from a specific non-metal atom group and that includes at least an oxygen atom. The composition of the complex oxide may include only one type of the first metal atom, or may include two or more types thereof in combination. The composition of the complex oxide may include only one type of the second metal atom, or may include two or more types thereof in combination. The composition of the complex oxide may include only an oxygen atom as the specific non-metal atom, or may include an oxygen atom and a specific non-metal atom other than an oxygen atom in combination.

The first metal atom group may include the first metal atom that includes at least one type selected from the group consisting of Li, Be, Na, Mg, K, Ca, Rb, Sr, Y, Cs, Ba, La, Ce, Pr, Nd, Pm, Sm, Eu, Gd, Tb, Dy, Ho, Er, Tm, Yb, Lu, Bi. The first metal atom may include at least one type selected from the group consisting of Ca, Sr, Y, Ba, and La, and may include at least Sr.

The first metal atom may include at least one type selected from the group consisting of Ca, Sr, Y, Ba, and La, and may further include at least one type selected from the group consisting of Li, Be, Na, Mg K, Rb, Y, Cs, Ce, Pr, Nd, Pm, Sm, Eu, Gd, Tb, Dy, Ho, Er, Tm, Yb, Lu, and Bi. In the case where the first metal atom includes at least one type selected from the group consisting of Ca, Sr, Y, Ba, and La, the total content of Ca, Sr, Y, Ba, and La in the first metal atom may be, for example, 50 mole-% or higher, 70 mole-% or higher, or 90 mole-% or higher. The total content of Ca, Sr, Y, Ba, and La in the first metal atom may be, for example, 100 mole-% or lower, or lower than 100 mole-%.

The first metal atom may include Sr, and may further include at least one type selected from the group consisting of Li, Be, Na, Mg, K, Ca, Rb, Y, Cs, Ba, La, Ce, Pr, Nd, Pm, Sm, Eu, Gd, Tb, Dy, Ho, Er, Tm, Yb, Lu, and Bi. In the case where the first meal atom includes Sr, the content of Sr in the first metal atom may be, for example, 50 mole-% or higher, 70 mole-% or higher, or 90 mole-% or higher. The content of Sr in the first metal atom may be, for example, 100 mole-% or lower, or lower than 100 mole-%.

The second metal atom group may include the second metal atom that includes at least one type selected from the group consisting of Al, Si, Sc, Ti, V, Cr, Mn, Fe, Co, Ni, Cu, Zn, Ga, Ge, Zr, Nb, Mo, Tc, Ru, Rh, Pd, Ag, Sn, Hf, Ta, W, Re, Os, Ir, Pt, Au, and the like. The second metal atom may include at least one type selected from the group consisting of Al, Si, Mn, Fe, Co, Ni, Cu, and Ge, may include at least one type selected from the group consisting of Fe and Ge, and may include at least Fe and Ge.

The second metal atom may include at least one type selected from the group consisting of Al, Si, Mn, Fe, Co, Ni, Cu, and Ge, and may further include at least one type selected from the group consisting of Sc, Ti, V, Cr, Zn, Ga, Zr, Nb, Mo, Tc, Ru, Rh, Pd, Ag, Sn, Hf, Ta, W, Re, Os, Ir, Pt, and Au. In the case where the second metal atom includes at least one type selected from the group consisting of Al, Si, Mn, Fe, Co, Ni, Cu, and Ge, the total content of Al, Si, Mn, Fe, Co, Ni, Cu, and Ge in the second metal atom may be, for example, 50 mole-% or higher, 70 mole-% or higher, or 90 mole-% or higher. The total content of Al, Si, Mn, Fe, Co, Ni, Cu, and Ge in the second metal atom may be, for example, 100 mole-% or lower, or lower than 100 mole-%.

The second metal atom may include at least one type selected from the group consisting of Fe and Ge, and may further include at least one type selected from the group consisting of Al, Si, Sc, Ti, V, Cr, Mn, Co, Ni, Cu, Zn, Ga, Zr, Nb, Mo, Tc, Ru, Rh, Pd, Ag, Sn, Hf, Ta, W, Re, Os, Ir, Pt, and Au. In the case where the second metal atom includes at least one type selected from the group consisting of Fe and Ge, the total content of Fe and Ge in the second metal atom may be, for example, 50 mole-% or higher, 70 mole-% or higher, or 90 mole-% or higher. The total content of Fe and Ge in the second metal atom may be, for example, 100 mole-% or lower, or lower than 100 mole-%.

The specific non-metal atom group may at least include O, N, F, S, and Cl. The specific non-metal atom includes at least O, and may include at least one type of specific non-metal atom (such as, for example, N, F, S, and Cl) other than O selected from the specific non-metal atom group. The content of O in the specific non-metal atom may be, for example, 50 mole-% or higher, 70 mole-% or higher, or 90 mole-% or higher.

In the composition of the complex oxide, the ratio of the total number of moles of the second metal atom to the total number of moles of the first metal atom, for example, may be 1.4 or greater and 1.6 or smaller and may be 1.45 or greater and 1.55 or smaller. In the composition of the complex oxide, the ratio of the total number of moles of the specific non-metal atom to the total number of moles of the first metal atom and the second metal atom, for example, may be 1.3 or greater and 1.5 or smaller, and may be 1.35 or greater or 1.45 or smaller. In the composition of the complex oxide, in the case where the total number of moles of the specific non-metal atom is set to be 7, for example, the total number of moles of the first metal atom may be greater than 1.9 and smaller than 2.1, and may be 1.95 or greater and 2.05 or smaller. In the composition of the complex oxide, in the case where the total number of moles of the specific non-metal atom is set to be 7, for example, the total number of moles of the second metal atom may be greater than 2.9 and smaller than 3.1, and may be 2.95 or greater and 3.05 or smaller.

The complex oxide may have the composition that is represented by, for example, a formula (1) below.

M¹_{b}M²_{c}X_{d} (1)

In the formula (1), b, c, and d, for example, may satisfy 1.9<b<2.1, 2.9<c<3.1, and 6.8<d<7.2 and may satisfy 1.95≤b≤2.05, 2.95≤c≤3.05, and 6.9<d<7.1.

M¹ may include at least one type selected from the group consisting of. for example, Li, Be, Na, Mg, K, Ca, Rb, Sr, Y, Cs, Ba, La, Ce, Pr, Nd, Pm, Sm, Eu, Gd, Tb, Dy, Ho, Er, Tm, Yb, Lu, and Bi. M¹ may include at least one type selected from the group consisting of Ca, Sr, Y, Ba, and La, and may include at least Sr.

M¹ may include at least one type selected from the group consisting of Ca, Sr, Y, Ba, and La, and may further include at least one type selected from the group consisting of Li, Be, Na, Mg, K, Rb, Y, Cs, Ce, Pr, Nd, Pm, Sm, Eu, Gd, Tb, Dy, Ho, Er, Tm, Yb, Lu, and Bi. In the case where M¹ includes at least one type selected from the groups consisting of Ca, Sr, Y, Ba, and La, the total content of Ca, Sr, Y, Ba, and La in M¹ may be, for example, 50 mole-% or higher, 70 mole-% or higher, or 90 mole-% or higher. The total content of Ca, Sr, Y, Ba, and La in M¹ may be, for example, 100 mole-% or lower, or lower than 100 mole-%.

M¹ may include Sr, and may further include at least one type selected from the group consisting of Li, Be, Na, Mg, K, Ca, Rb, Y, Cs, Ba, La, Ce, Pr, Nd, Pm, Sm, Eu, Gd, Tb, Dy, Ho, Er, Tm, Yb, Lu, and Bi. In the case where M¹ includes Sr, the content of Sr in M¹ may be, for example, 50 mole-% or higher, 70 mole-% or higher, or 90 mole-% or higher. The content of Sr in M¹ may be, for example, 100 mole-% or lower, or lower than 100 mole-%.

M² may include at least one type selected from the group consisting of, for example, Al, Si, Sc, Ti, V, Cr, Mn, Fe, Co, Ni, Cu, Zn, Ga, Ge, Zr, Nb, Mo, Tc, Ru, Rh, Pd, Ag, Sn, Hf, Ta, W, Re, Os, Ir, Pt, and Au. M² may include at least one type selected from the group consisting of Al, Si, Mn, Fe, Co, Ni, Cu, and Ge, may include at least one type selected from the group consisting of Fe and Ge, and may include at least Fe and Ge.

M² includes at least one type selected from the group consisting of Al, Si, Mn, Fe, Co, Ni, Cu, and Ge, and may further include at least one type selected from the group consisting of Sc, Ti, V, Cr, Zn, Ga, Zr, Nb, Mo, Tc, Ru, Rh, Pd, Ag, Sn, Hf, Ta, W, Re, Os, Ir, Pt, and Au. In the case where M² includes at least one type selected from the group consisting of Al, Si, Mn, Fe, Co, Ni, Cu, and Ge, the total content of Al, Si, Mn, Fe, Co, Ni, Cu, and Ge in M² may be, for example, 50 mole-% or higher, 70 mole-% or higher, or 90 mole-% or higher. The total content of Al, Si, Mn, Fe, Co, Ni, Cu, and Ge in M² may be, for example, 100 mole-% or lower, or lower than 100 mole-%.

M² may include at least one type selected from the group consisting of Fe and Ge, and may further include at least one type selected from the group consisting of Al, Si, Sc, Ti, V, Cr, Mn, Co, Ni, Cu, Zn, Ga, Zr, Nb, Mo, Tc, Ru, Rh, Pd, Ag, Sn, Hf, Ta, W, Re, Os, Ir, Pt, and Au. In the case where M² includes at least one type selected from the group consisting of Fe and Ge, the total content of Fe and Ge in M² may be, for example, 50 mole-% or higher, 70 mole-% or higher, or 90 mole-% or higher. The total content of Fe and Ge in M² may be, for example, 100 mole-% or lower, or lower than 100 mole-%.

X may include O, and may further include at least one type of the specific non-metal atom selected from the group consisting of N, F, S, and Cl. The content of O in X may be, for example, 50 mole-% or higher, 70 mole-% or higher, or 90 mole-% or higher.

The number of moles of oxygen atoms included in the composition of the complex oxide is calculated based on the metal ion amount quantified using an ICP luminescence spectroscopic analysis method, taking into consideration the valence of each of the metals, and assuming that the total number of moles of the first metal atom and the second metal atom is 5. The number of moles of each of N, F, S, and Cl included in the composition of the complex oxide is also calculated in the same manner.

It is assumed, for example, that Sr (divalent) to be the first metal atom, and Fe (trivalent) and Ge (tetravalent) to be the second metal atom are detected to be 2:2:1 as the ratios of the number of moles thereof using the ICP luminescence spectroscopic analysis method. In this case, the detected amounts of strontium ions, iron ions, and germanium ions are respectively 2, 2, and 1 on the molar basis. Assuming that the valence of a strontium ion is 2, the valence of an iron ion is 3, and the valence of a germanium ion is 4, the number of moles of oxygen atoms included in the complex oxide is calculated to be (2×2+3×2+1×4)/2=7.

It may be identified, by measuring an X-ray diffraction spectrum, that the complex oxide has a melilite-type crystal structure. For example, the complex oxide may be identified to have the melilite-type crystal structure in the case where a similarity relation is established between an XRD spectrum of an inorganic crystal for which it is indicated that the inorganic crystal has a composition corresponding to the complex oxide and that the inorganic crystal has the melilite crystal structure in Inorganic Crystal Structure Database (ICSD), and the XRD spectrum of the complex oxide.

In the case where the complex oxide has a theoretical composition of, for example, Sr₂Fe₂GeO₇, the complex oxide may be identified to have the melilite-type crystal structure when, for plural (such as, for example, four) high intensity peaks of the XRD data of Sr₂CoGe₂O₇ in ICSD, the XRD data of the complex oxide has the peaks corresponding thereto. For example, Sr₂Fe₂GeO₇ may be identified to have the melilite-type crystal structure when 2θ of the XRD data of Sr₂Fe₂GeO₇ is present at positions of, for example, 27.44°±2°, 29.60°±2°, 34.80°±2°, and 49.06°±2°.

The shape of the complex oxide may be selected as necessary from, for example, a particle shape and a bulk shape. The volume mean particle diameter of the complex oxide may be, for example, 1 nm or larger and 100 µm or smaller. The volume mean particle diameter of the complex oxide may be 20 nm or larger, or 10 µm or smaller. The volume mean particle diameter of the complex oxide is determined as the particle diameter that corresponds to the volume cumulative 50% from the small particle diameter side in the volume-based cumulative particle size distribution. The volume-based cumulative particle size distribution is measured using, for example, a laser diffraction particle size distribution measuring apparatus.

The complex oxide included in the electrode active material may be one type alone or may be two or more types in combination. The electrode active material may be a positive electrode active material or may be a negative electrode active material, depending on the active material included in the opposite electrode. When the fluoride ion battery is manufactured, the complex oxide can be used as the positive electrode active material by including an active material having a potential that is lower than that of the complex oxide, in the opposite electrode. On the other hand, the complex oxide can be used as the negative electrode active material by including an active material having a potential that is higher than that of the complex oxide, in the opposite electrode.

In the case where the electrode active material is used as the positive electrode active material, an optional active material having a potential that is lower than that of the positive electrode active material can be selected as the negative electrode active material. Examples of the negative electrode active material may include, for example, a metal elemental substance, an alloy, a metal oxide, and fluorides of these. Examples of the metal atom included in the negative electrode active material may include, for example, La, Ca, Al, Eu, Li, Si, Ge, Sn, In, V, Cd, Cr, Fe, Zn, Ga, Ti, Nb, Mn, Yb, Zr, Sm, Ce, Mg, and Pb. It is preferred that, among these, the negative electrode active material include at least one type selected from the group consisting of Mg, MgFₓ, Al, AlFₓ, Sn, SnFₓ, Ce, CeFₓ, Ca, CaFₓ, Pb, and PbFₓ. "x" is a real number that is greater than zero. Examples of the negative electrode active material may also include a carbon material and a fluoride thereof. Examples of the carbon material include, for example, black lead, coke, and carbon nanotubes. Other examples of the negative electrode active material may also include a polymer material. Examples of the polymer material may include, for example, polyaniline, polypyrrole, polyacetylene, and polythiophene.

In the case where the electrode active material is used as the negative electrode active material, an optional active material having a potential that is higher than that of the negative electrode active material may be selected as the positive electrode active material. Examples of the positive electrode active material may include, for example, a metal elemental substance, an alloy, a metal oxide, and fluorides thereof. Examples of the metal atom included in the positive electrode active material can include, for example, Cu, Ag, Ni, Co, Pb, Ce, Mn, Au, Pt, Rh, V, Os, Ru, Fe, Cr, Bi, Nb, Sb, Ti, Sn, and Zn. It is preferred that, among these, the positive electrode active material include at least one type selected from the group consisting of Cu, CuFₓ, Fe, FeFₓ, Bi, and BiFₓ. "x" is a real number that is greater than zero. The carbon materials and the polymer materials listed above may be used each as the positive electrode active material.

The content rate of the complex oxide included in the electrode active material, relative to the electrode active material, may be, for example, 50% by mass or higher, 70% by mass or higher, or 90% by mass or higher. The upper limit of the content rate of the complex oxide may be, for example, 100% by mass or lower.

A manufacturing method for a ceramic material may be used as a manufacturing method for the complex oxide. Such a method may be used as, for example, a liquid phase method such as a polymerized complex method, a hydrothermal synthesis method, or a coprecipitation method, or a solid phase method such as a sintering method, or a mechanochemical method. Among these, the liquid phase method may be used for acquisition of the complex oxide that is chemically highly homogeneous.

The complex oxide may also be synthesized using, for example, the polymerized complex method. With this method, the chemical homogeneity of the acquired complex oxide can be enhanced compared to that of the solid phase method. In this method, metal sources including the metals included in the complex oxide are first weighed to have the stoichiometric ratios equal to those of the metals included in the aimed complex oxide, to acquire a metal source mixture. The metal source mixture, pure water, and citric acid are next mixed with each other, and ethylene glycol is mixed therewith as necessary to acquire a raw material solution. The raw material solution is heated and concentrated to acquire a powdered precursor. The precursor is crushed as necessary and heat treatment is thereafter applied to the precursor to thereby be able to acquire a desired complex oxide. For the details of the polymerized complex method, for example, WO2019-065285 may be referred to.

The metal sources to be used in the manufacture of the complex oxide may be selected as appropriate from, for example, a nitrate salt, an acetate salt, and an oxide each including the desired metal, to be used.

### Electrode composite for Fluoride Ion Battery

The electrode composite for a fluoride ion battery (hereinafter, also referred to simply as "electrode composite") includes the complex oxide that includes the melilite-type crystal structure. The complex oxide may be included in the electrode composite as an electrode active material. The details of the complex oxide are the same as described above. The content of the complex oxide in the electrode composite, relative to the electrode composite, may be, for example, 30% by mass or higher and 99% by mass or lower, and may be 50% by mass or higher, or 80% by mass or lower. The electrode composite may include one type of the complex oxide alone or may include two or more types thereof in combination.

In addition to the complex oxide, the electrode composite may further include at least one type of another component selected from the group consisting of a conductive agent, a binder, a solid electrolyte, a dispersion agent, and the like.

The conductive agent only has to have desired electron conductivity, and examples thereof may include, for example, a carbon material. Examples of the carbon material include, for example, carbon black such as fibrous carbon, acetylene black, Ketjen black, furnace black, or thermal black, graphene, fullerene, and carbon nanotubes. Examples of the binder may include, for example, fluorine-based binders such as polyvinylidene fluoride (PVDF) and polytetrafluoroethylene (PTFE).

Examples of the solid electrolyte may include a fluoride of lanthanoid such as La or Ce, a fluoride of an alkali metal such as Li, Na, K, Rb, or Cs, and a fluoride of an alkali earth metal such as Ca, Sr, or Ba. For example, the examples include a fluoride of La and Ba, such as, for example, La_{0.9}Ba_{0.1}F_{2.9}, and a fluoride of Pb and Sn, such as, for example, PbSnF₄.

In the case where the electrode composite includes other components in addition to the complex oxide, the content of the other components in the electrode composite, relative to the electrode composite, may be, for example, 1% by mass or higher and 80% by mass or lower, and may be 20% by mass or higher, or 50% by mass or lower.

The electrode composite may be used in forming the electrode active material layer included in the electrode. The electrode composite may be a positive electrode composite included in a positive electrode active material layer or may be a negative electrode composite included in a negative electrode active material layer, depending on the active material included in the opposite electrode thereof.

### Electrode for Fluoride Ion Battery

The electrode for a fluoride ion battery (hereinafter, also referred to simply as "electrode") includes the electrode composite for a fluoride ion battery. The electrode may include a current collector and an electrode active material layer disposed on the current collector. Examples of the material of the current collector can include, for example, gold, platinum, SUS, aluminum, nickel, iron, titanium, and carbon. The material of the current collector may be selected as necessary depending on the potential of the electrode. Examples of the current collector may include, for example, a foil shape, a mesh shape, and a porous shape.

The electrode active material layer disposed on the current collector may include the above electrode composite. The content of the complex oxide in the electrode active material layer, relative to the electrode active material layer, may, for example, be 20% by mass or higher, 50% by mass or higher, 70% by mass or higher, or 90% by mass or higher. The content of the complex oxide in the electrode active material layer may be, for example, 99% by mass or lower.

In addition to the complex oxide, the electrode active material layer may further include at least one type selected from the group consisting of a conductive agent, a binder, a solid electrolyte, a dispersion agent, and the like. The content of the conductive agent in the electrode active material layer, relative to the electrode active material layer, for example, may be 1% by mass or higher and 20% by mass or lower, and may be 5% by mass or higher, or 10% by mass or lower. The content of the binder in the electrode active material layer, relative to the electrode active material layer, may be, for example, 1% by mass or higher and 30% by mass or lower.

The electrode for a fluoride battery may be a positive electrode for a fluoride battery, that includes a positive electrode active material layer or may be a negative electrode for a fluoride battery, that includes a negative electrode active material layer, depending on the active material included in the active material layer of the opposite electrode thereof.

The electrode may be manufactured by pressuring the electrode composite as powder to thereby form the electrode active material layer, and connecting the electrode active material layer and the current collector to each other. The electrode may be manufactured by applying the electrode composite that includes a solvent onto the current collector to be as necessary dried and pressure-formed, and thereby forming the electrode active material layer on the current collector.

### Fluoride Ion Battery

The fluoride ion battery includes the electrode for a fluoride ion battery, an electrolyte, and an opposite electrode. The electrode for a fluoride ion battery may be constituted as a positive electrode whose opposite electrode is a negative electrode, or may be constituted as a negative electrode whose opposite electrode is a positive electrode. The fluoride ion battery may include a separator between the positive electrode and the negative electrode. The fluoride ion battery may be a primary battery or may be a secondary battery, or may preferably be a secondary battery. A primary battery also includes use of a secondary battery as a primary battery, that is use with the purpose of discharging only once after the charging thereof. Examples of the shape of the fluoride ion battery include, for example, a coin shape, a laminate shape, a cylindrical shape, and a square shape.

The details of the electrode for a fluoride ion battery, included in the fluoride ion battery is the same as described above. The electrolyte is disposed between the electrode for a fluoride ion battery, and the opposite electrode thereto. The electrolyte may be a liquid electrolyte, that is an electrolytic solution, or a solid electrolyte.

The electrolytic solution may be, for example, a non-aqueous electrolytic solution that includes a fluoride salt and an organic solvent. Examples of the fluoride salt may include an inorganic fluoride salt, an organic fluoride salt, an ionic liquid, and the like. Examples of the inorganic fluoride salt may include an XF. X may include at least one type of alkali metal selected from the group consisting of Li, Na, K, Rb, and Cs. Examples of a cation of the organic fluoride salt may include an alkylammonium cation such as a tetramethylammonium cation. The concentration of the fluoride salt in the electrolytic solution, for example, may be 0.1 mole-% or higher and 40 mole-% or lower, and may be 1 mole-% or higher, or 10 mole-% or lower.

The organic solvent included in the electrolytic solution only has to be a solvent that solves the fluoride salt. Examples of the organic solvent may include, for example, a glyme such as triethyleneglycoldimethyl ether (G3) or tetraethyleneglycoldimetyl ether (G4), a cyclic carbonate such as ethylene carbonate (EC), fluoroethylene carbonate (FEC), difluoroethylene carbonate (DFEC), propylene carbonate (PC), or butylene carbonate (BC), and a chain carbonate such as dimethyl carbonate (DMC), diethyl carbonate (DEC), or ethylmethyl carbonate (EMC). An ionic liquid may also be used as the organic solvent.

Examples of the solid electrolyte may include a fluoride of lanthanoid such as La or Ce, a fluoride of an alkali metal such as Li, Na, K, Rb, or Cs, and a fluoride of an alkali earth metal such as Ca, Sr, or Ba. For example, the examples include a fluoride of La and Ba (such as, for example, La_{0.9}Ba_{0.1}F_{2.9}), and a fluoride of Pb and Sn (such as, for example, PbSnF₄).

The opposite electrode may include a current collector and an electrode active material layer disposed on the current collector. The material of the current collector may be selected as necessary depending on the potential of the opposite electrode. In the case where the opposite electrode is used as, for example, a negative electrode, examples of the material of the current collector may include, for example, gold, platinum, SUS, copper, nickel, and carbon. Examples of the shape of the current collector may include, for example, a foil shape, a mesh shape, and a porous shape.

In the case where a fluoride ion battery is manufactured using the electrode for a fluoride ion battery as the positive electrode thereof, the negative electrode active material included in the negative electrode active material layer of the opposite electrode to be the negative electrode only has to be a material having a potential that is lower than that of the complex oxide to be the positive electrode active material. The specific examples of the negative electrode active material are as above. The content of the negative electrode active material in the negative electrode active material layer, relative to the negative electrode active material layer, for example, may be 30% by mass or higher, or may be 50% by mass or higher, 70% by mass or higher, or 90% by mass or higher. The content of the negative electrode active material in the negative electrode active material layer may be, for example, 99% by mass or lower.

In the case where the fluoride ion battery is manufactured using the electrode for a fluoride ion battery as the negative electrode thereof, the positive electrode active material included in the positive electrode active material layer of the opposite electrode to be the positive electrode only has to be an active material having a potential that is higher than that of the complex oxide to be the negative electrode active material. The specific examples of the positive electrode active material are as above. The content of the positive electrode active material in the positive electrode active material layer, relative to the positive electrode active material layer, for example, may be 30% by mass or higher, or may be 50% by mass or higher, 70% by mass or higher, or 90% by mass or higher. The content of the positive electrode active material in the positive electrode active material layer may be, for example, 99% by mass or lower.

In addition to the electrode active material, the electrode active material layer of the opposite electrode may further include at least one type selected from the group consisting of a conductive agent, a binder, a solid electrolyte, a dispersion agent, and the like. The content of the conductive agent in the electrode active material layer of the opposite electrode, relative to the electrode active material layer, for example, may be 1% by mass or higher and 20% by mass or lower, or may be 5% by mass or higher, or 10% by mass or lower. The content of the binder in the electrode active material layer, relative to the electrode active material layer may be, for example, 1% by mass or higher and 30% by mass or lower.

### EXAMPLE

The present invention will be described below in detail with reference to Example while the present invention is not limited to Example.

### Example 1

### Synthesis of Complex Oxide

Sr(NO₃)₂ (produced by FUJIFILM Wako Pure Chemical Corporation), Fe(NO₃)₂·9H₂O (produced by FUJIFILM Wako Pure Chemical Corporation), and GeO₂ (produced by Kojundo Chemical Laboratory Co., Ltd.) were weighed to be 2:2:1 as their metal molar ratios. Pure water, citric acid (produced by FUJIFILM Wako Pure Chemical Corporation) whose molar amount is five times as much as the total cation amount, and ethylene glycol (produced by FUJIFILM Wako Pure Chemical Corporation) whose molar amount is equal to the total cation amount were added to the above, and all these raw materials were stirred to be homogeneous to obtain a raw material solution. The raw material solution was put in a thermostatic bath that was set at 150°C and was left untouched to be heated and concentrated to thereby obtain a powdered precursor. The acquired precursor was pulverized and heat treatment was thereafter applied to the precursor at 1,000°C for 10 hours in the air using a box furnace to obtain a complex oxide.

### Compositional Analysis

For the complex oxide obtained as above, the composition of the complex oxide was determined using an inductively coupled plasma (ICP) atomic emission spectrometry. For example, the complex oxide was alkali-dissolved as a pre-process and was thereafter HCl-heat-dissolved to measure the compositional amounts of the metal ions using an inductively coupled plasma (ICP) atomic emission spectrometry apparatus (ICP-AES; Optima 8300: manufactured by Perkin Elmer Corporation), and the molar ratio of the oxygen atoms in the composition was determined assuming that the total of the compositional amounts of the metal ions was 5. The obtained complex oxide had a composition represented by Sr_{2.00}Fe_{2.04}Ge_{0.96}O_{6.98}.

### Preparation of Solid Electrolyte

BaF₂ (produced by Kojundo Chemical Laboratory Co., Ltd) and LaF₃ (produced by (Kojundo Chemical Laboratory Co., Ltd.) were weighed to be 1:9 as their molar ratios. The weighed materials were dried by being heated at 120°C for 2 hours and were thereafter pulverized and mixed with each other at 600 rpm for 10 hours using a planetary ball mill to obtain a mixture. Heat treatment was applied to the obtained mixture at 600°C for 10 hours in an argon atmosphere to acquire a solid electrolyte that had a composition represented by La_{0.9}Ba_{0.1}F_{2.9}.

### Preparation of Positive Electrode composite

150 mg of the complex oxide obtained as above as the electrode active material, 300 mg of the solid electrolyte obtained as above, and 50 mg of VGCF^{(R)}-H (produced by Showa Denko K.K.) as a conductive agent were prepared and were mixed with each other for 15 minutes in a mortar. 15 g of zirconia (ZrO₂) balls (Φ 3 mm) as a media for mixing was added to the above to be mixed with each other using a homogenizer to obtain a positive electrode composite. This step was fully performed in a argon-filled glove box.

### Preparation of Negative Electrode composite

150 mg of SnF₂ (produced by Sigma-Aldrich Co., LLC) as a negative electrode active material, 300 mg of the solid electrolyte obtained as above, and 50 mg of VGCF^{(R)}-H as a conductive agent were prepared and were mixed with each other for 15 minutes in a mortar. 15 g of ZrO₂ balls (Φ 3 mm) as a media for mixing was added to the above to be mixed with each other using a homogenizer to obtain a negative electrode composite. This step was fully performed in a argon-filled glove box.

### Manufacture of Battery for Evaluation

10 mg of the positive electrode composite, 175 mg of the solid electrolyte, and 50 mg of the negative electrode composite, each obtained as above, were stacked on each other in this order to be power-compacted. An Au foil was attached on each of both ends as a current collector to manufacture a battery for evaluation. This step was fully performed in a argon-filled glove box.

### Evaluation

### XRD Measurement

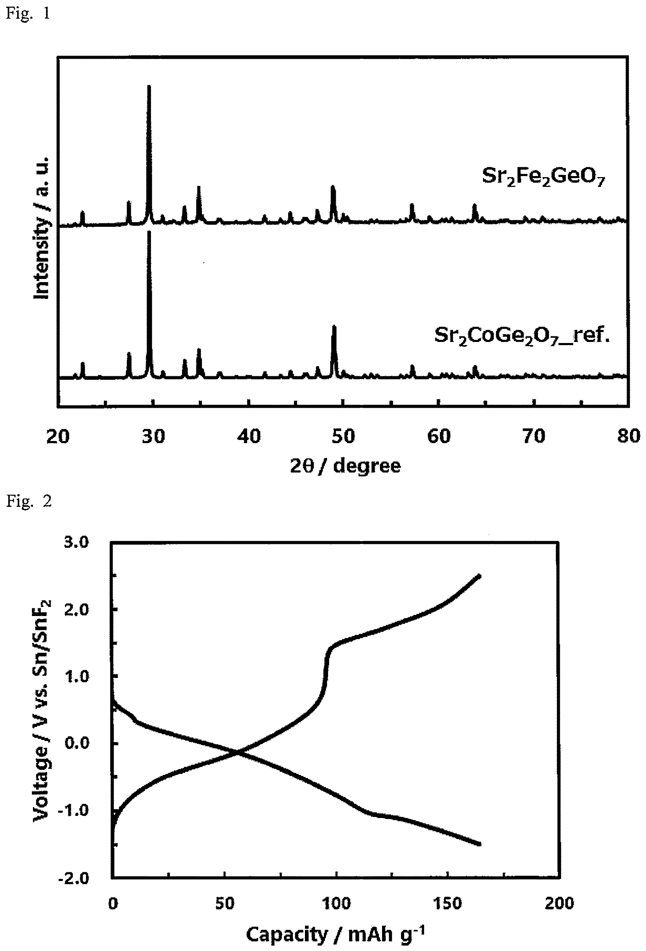

The complex oxide obtained as above (Sr_{2.00}Fe_{2.04}Ge_{0.96}O_{6.98}) was filled in an XRD glass folder to execute powder XRD measurement therefor using an X-ray diffraction measuring apparatus (manufactured by Rigaku Corporation, Miniflex 600). For example, the measurement was conducted using a CuKα radiation (λ=0.154 nm) at a scanning speed of 10°/min from 2θ=20° to 80° with the step width: 0.02°. Fig. 1 depicts the result thereof. The lower stage in Fig. 1 depicts an XRD pattern of a melilite-type complex oxide having the composition that is represented by Sr₂CoGe₂O₇ as an authentic preparation.

In the XRD pattern of the complex oxide obtained as above, peaks are recognized at the positions of 2θ=27.44°, 29.60°, 34.80°, and 49.08° as the four high intensity peaks.

It turned out that the complex oxide acquired as above had the melilite-type crystal structure from the fact that the peaks were observed that corresponded to the four peaks at 2θ=27.44°±2°, 29.60°±2°, 34.80°±2°, and 49.06°±2° in the XRD data of ICSD.

### Charge and Discharge Test

A constant current charge and discharge test was conducted for the battery for evaluation, that was acquired in Example 1. In the charge and discharge test, charge and discharge were performed for 11 times setting the current to be 6.7 mA/g, and the charge and discharge termination potentials to respectively be -1.5 V and 2.5 V (vs. Sn/SnF₂), in an environment at 140°C.Fig. 2 depicts the charge and the discharge profiles taken at the eleventh cycle.

In the charge profile, a first plateau region was observed in the vicinity of -1.0 to 0.5 V (vs. Sn/SnF₂) and a second plateau region was observed in the vicinity of 1.5 to 2.0 V (vs. Sn/SnF₂). The theoretical capacity of Sr₂Fe₂GeO₇ is 56.9 mAh/g per one electron reaction. It may be considered that charge compensation is achieved by the reaction of Fe³⁺/Fe⁴⁺ from the fact that a capacity corresponding to a two-electron reaction is acquired in the first plateau region. It may be considered that charge compensation is achieved by redox of oxygen from the fact that a capacity exceeding the number of the reacted electrons by oxidation and reduction of the metal atoms is exhibited in the second plateau region.

It is to be understood that although the present invention has been described with regard to preferred embodiments thereof, various other embodiments and variants may occur to those skilled in the art, which are within the scope of the invention as defined by the following claims.

## Claims

1. A fluoride ion battery comprising
- an electrode containing an electrode active material,
- an electrolyte, and
- an opposite electrode,
wherein the electrolyte is a liquid electrolyte or a solid electrolyte, wherein the liquid electrolyte is an electrolytic solution that includes a fluoride salt and an organic solvent,
**characterised in that**
the electrode active material comprises a complex oxide that comprises a melilite-type crystal structure.

2. The fluoride ion battery according to claim 1, wherein
the complex oxide comprises:
a first metal atom that comprises at least one selected from a first metal atom group below;
a second metal atom that comprises at least one selected from a second metal atom group below;
a specific non-metal atom that comprises at least one selected from a specific non-metal atom group below; and
at least an oxygen atom as the specific non-metal atom, wherein
the first metal atom group: Li, Be, Na, Mg, K, Ca, Rb, Sr, Y, Cs, Ba, La, Ce, Pr, Nd, Pm, Sm, Eu, Gd, Tb, Dy, Ho, Er, Tm, Yb, Lu, and Bi, wherein
the second metal atom group: Al, Si, Sc, Ti, V, Cr, Mn, Fe, Co, Ni, Cu, Zn, Ga, Ge, Zr, Nb, Mo, Tc, Ru, Rh, Pd, Ag, Sn, Hf, Ta, W, Re, Os, Ir, Pt, and Au, and wherein
the specific non-metal atom group: O, F, N, S, and Cl.

3. The fluoride ion battery according to claim 2, wherein
the complex oxide has a composition in which a ratio of a total number of moles of the second metal atom to a total number of moles of the first metal atom is 1.4 or greater and 1.6 or smaller, and a ratio of a total number of moles of the specific non-metal atom to a total number of moles of the first metal atom and the second metal atom is 1.3 or greater and 1.5 or smaller.

4. The fluoride ion battery according to claim 2 or 3, wherein
the complex oxide comprises at least one selected from the group consisting of Ca, Sr, Y, Ba, and La as the first metal atom.

5. The fluoride ion battery according to any one of claims 2 to 4, wherein
the complex oxide comprises at least one selected from the group consisting of Al, Si, Mn, Fe, Co, Ni, Cu, and Ge as the second metal atom.

6. The fluoride ion battery according to any one of claims 2 to 5, wherein
the complex oxide comprises at least Sr as the first metal atom.

7. The fluoride ion battery according to any one of claims 2 to 6, wherein
the complex oxide comprises at least one selected from the group consisting of Fe and Ge as the second metal atom.

8. The fluoride ion battery according to any one of claims 1 to 7, wherein
the complex oxide has a volume mean particle diameter that is 20 nm or larger and 10 µm or smaller.

9. The fluoride ion battery according to claim 1, wherein
the complex oxide has a composition that is represented by a formula (1) below, M¹_{b}M²_{c}X_{d} (1), wherein
in the formula (1), 1.9<b<2.1, 2.9<c<3.1, and 6.8<d<7.2, wherein
M¹ comprises at least one selected from the group consisting of Li, Be, Na, Mg, K, Ca, Rb, Sr, Y, Cs, Ba, La, Ce, Pr, Nd, Pm, Sm, Eu, Gd, Tb, Dy, Ho, Er, Tm, Yb, Lu, and Bi, wherein
M² comprises at least one selected from the group consisting of Al, Si, Sc, Ti, V, Cr, Mn, Fe, Co, Ni, Cu, Zn, Ga, Ge, Zr, Nb, Mo, Tc, Ru, Rh, Pd, Ag, Sn, Hf, Ta, W, Re, Os, Ir, Pt, and Au, and wherein
X comprises O and optionally comprises at least one selected from the group consisting of N, F, S, and Cl.

10. The fluoride ion battery according to claim 9, wherein
in the formula (1), the M¹ comprises at least one selected from the group consisting of Ca, Sr, Y, Ba, and La.

11. The fluoride ion battery according to claim 9 or 10, wherein
in the formula (1), the M² comprises at least one selected from the group consisting of Al, Si, Mn, Fe, Co, Ni, Cu, and Ge.

12. The fluoride ion battery according to any one of claims 9 to 11, wherein
in the formula (1), the M¹ comprises at least Sr.

13. The fluoride ion battery according to any one of claims 9 to 12, wherein
in the formula (1), the M² comprises at least one selected from the group consisting of Fe and Ge.

14. The fluoride ion battery according to any one of claims 9 to 13, wherein
the complex oxide has a volume mean particle diameter that is 20 nm or larger and 10 µm or smaller.

15. The fluoride ion battery according to any one of claims 1 to 14, wherein the solid electrolyte comprises:
a fluoride of a lanthanoid, preferably La or Ce,
a fluoride of an alkali metal, preferably Li, Na, K, Rb, or Cs, or
a fluoride of an alkali earth metal such as Ca, Sr, or Ba.

## Patentansprüche

1. Eine Fluoridionenbatterie, umfassend
- eine Elektrode, die ein Elektrodenaktivmaterial enthält,
- einen Elektrolyten und
- eine Gegenelektrode,
wobei der Elektrolyt ein Flüssigelektrolyt oder ein Festelektrolyt ist, wobei der Flüssigelektrolyt eine Elektrolytlösung ist, die ein Fluoridsalz und ein organisches Lösungsmittel beinhaltet,
**dadurch gekennzeichnet, dass**
das Elektrodenaktivmaterial ein Komplexoxid umfasst, das eine Kristallstruktur vom Melilit-Typ umfasst.

2. Die Fluoridionenbatterie nach Anspruch 1, wobei
das Komplexoxid umfasst:
ein erstes Metallatom, das mindestens eines, ausgewählt aus einer nachstehenden ersten Metallatomgruppe, umfasst;
ein zweites Metallatom, das mindestens eines, ausgewählt aus einer nachstehenden zweiten Metallatomgruppe, umfasst;
ein spezifisches Nichtmetallatom, das mindestens eines, ausgewählt aus einer nachstehenden spezifischen Nichtmetallatomgruppe, umfasst und
mindestens ein Sauerstoffatom als das spezifische Nichtmetallatom, wobei die erste Metallatomgruppe: Li, Be, Na, Mg, K, Ca, Rb, Sr, Y, Cs, Ba, La, Ce, Pr, Nd, Pm, Sm, Eu, Gd, Tb, Dy, Ho, Er, Tm, Yb, Lu und Bi, wobei
die zweite Metallatomgruppe: Al, Si, Sc, Ti, V, Cr, Mn, Fe, Co, Ni, Cu, Zn, Ga, Ge, Zr, Nb, Mo, Tc, Ru, Rh, Pd, Ag, Sn, Hf, Ta, W, Re, Os, Ir, Pt und Au, und wobei die spezifische Nichtmetallatomgruppe: O, F, N, S und Cl.

3. Die Fluoridionenbatterie nach Anspruch 2, wobei
das Komplexoxid eine Zusammensetzung aufweist, bei der ein Verhältnis einer Gesamtmolzahl des zweiten Metallatoms zu einer Gesamtmolzahl des ersten Metallatoms 1,4 oder größer und 1,6 oder kleiner ist, und ein Verhältnis einer Gesamtmolzahl des spezifischen Nichtmetallatoms zu einer Gesamtmolzahl des ersten Metallatoms und des zweiten Metallatoms 1,3 oder größer und 1,5 oder kleiner ist.

4. Die Fluoridionenbatterie nach Anspruch 2 oder 3, wobei
das Komplexoxid mindestens eines, ausgewählt aus der Gruppe bestehend aus Ca, Sr, Y, Ba und La, als das erste Metallatom umfasst.

5. Die Fluoridionenbatterie nach einem der Ansprüche 2 bis 4, wobei das Komplexoxid mindestens eines, ausgewählt aus der Gruppe bestehend aus Al, Si, Mn, Fe, Co, Ni, Cu und Ge, als zweites Metallatom umfasst.

6. Die Fluoridionenbatterie nach einem der Ansprüche 2 bis 5, wobei das Komplexoxid mindestens Sr als das erste Metallatom umfasst.

7. Die Fluoridionenbatterie nach einem der Ansprüche 2 bis 6, wobei das Komplexoxid mindestens eines, ausgewählt aus der Gruppe bestehend aus Fe und Ge, als das zweite Metallatom umfasst.

8. Die Fluoridionenbatterie nach einem der Ansprüche 1 bis 7, wobei das Komplexoxid einen volumengemittelten Teilchendurchmesser aufweist, der 20 nm oder größer und 10 µm oder kleiner ist.

9. Die Fluoridionenbatterie nach Anspruch 1, wobei
das Komplexoxid eine Zusammensetzung aufweist, die durch eine nachstehende Formel (1) dargestellt ist
M¹_{b}M²_{c}X_{d} (1),
wobei
in der Formel (1) 1,9<b<2,1, 2,9<c<3,1 und 6,8<d<7,2, wobei M¹ mindestens eines, ausgewählt aus der Gruppe bestehend aus Li, Be, Na, Mg, K, Ca, Rb, Sr, Y, Cs, Ba, La, Ce, Pr, Nd, Pm, Sm, Eu, Gd, Tb, Dy, Ho, Er, Tm, Yb, Lu und Bi, umfasst, wobei
M² mindestens eines, ausgewählt aus der Gruppe bestehend aus Al, Si, Sc, Ti, V, Cr, Mn, Fe, Co, Ni, Cu, Zn, Ga, Ge, Zr, Nb, Mo, Tc, Ru, Rh, Pd, Ag, Sn, Hf, Ta, W, Re, Os, Ir, Pt und Au, umfasst und wobei
X O umfasst und gegebenenfalls mindestens eines, ausgewählt aus der Gruppe bestehend aus N, F, S und Cl, umfasst.

10. Die Fluoridionenbatterie nach Anspruch 9, wobei
in der Formel (1) das M¹ mindestens eines, ausgewählt aus der Gruppe bestehend aus Ca, Sr, Y, Ba und La, umfasst.

11. Die Fluoridionenbatterie nach Anspruch 9 oder 10, wobei
in der Formel (1) das M² mindestens eines, ausgewählt aus der Gruppe bestehend aus Al, Si, Mn, Fe, Co, Ni, Cu und Ge, umfasst.

12. Die Fluoridionenbatterie nach einem der Ansprüche 9 bis 11, wobei in der Formel (1) das M¹ mindestens Sr umfasst.

13. Die Fluoridionenbatterie nach einem der Ansprüche 9 bis 12, wobei
in der Formel (1) das M² mindestens eines, ausgewählt aus der Gruppe bestehend aus Fe und Ge, umfasst.

14. Die Fluoridionenbatterie nach einem der Ansprüche 9 bis 13, wobei
das Komplexoxid einen volumengemittelten Teilchendurchmesser von 20 nm oder größer und 10 µm oder kleiner aufweist.

15. Die Fluoridionenbatterie nach einem der Ansprüche 1 bis 14, wobei der Festelektrolyt umfasst:
ein Fluorid eines Lanthanoids, vorzugsweise La oder Ce,
ein Fluorid eines Alkalimetalls, vorzugsweise Li, Na, K, Rb oder Cs, oder
ein Fluorid eines Erdalkalimetalls wie Ca, Sr oder Ba.

## Revendications

1. Batterie à ions fluorure comprenant
- une électrode contenant un matériau actif d'électrode,
- un électrolyte, et
- une électrode opposée,
dans laquelle l'électrolyte est un électrolyte liquide ou un électrolyte solide, dans laquelle l'électrolyte est une solution électrolytique qui contient un sel de fluorure et un solvant organique,
**caractérisée en ce que**
le matériau actif d'électrode comprend un oxyde complexe qui comprend une structure cristalline de type mélilite.

2. Batterie à ions fluorure selon la revendication 1, dans laquelle l'oxyde complexe comprend :
un premier atome métallique qui comprend au moins un choisi dans le premier groupe d'atomes métalliques ci-dessous ;
un deuxième atome métallique qui comprend au moins un choisi dans le deuxième groupe d'atomes métalliques ci-dessous ;
un atome non métallique spécifique qui comprend au moins un choisi dans le groupe d'atomes non métalliques spécifiques ci-dessous ; et
au moins un atome d'oxygène en tant qu'atome non métallique spécifique, dans laquelle
le premier groupe d'atomes métalliques est le suivant : Li, Be, Na, Mg, K, Ca, Rb, Sr, Y, Cs, Ba, La, Ce, Pr, Nd, Pm, Sm, Eu, Gd, Tb, Dy, Ho, Er, Tm, Yb, Lu et Bi, dans laquelle
le deuxième groupe d'atomes métalliques est le suivant : Al, Si, Sc, Ti, V, Cr, Mn, Fe, Co, Ni, Cu, Zn, Ga, Ge, Zr, Nb, Mo, Tc, Ru, Rh, Pd, Ag, Sn, Hf, Ta, W, Re, Os, Ir, Pt et Au, et dans laquelle
le groupe d'atomes non métalliques spécifiques est le suivant : O, F, N, S et Cl.

3. Batterie à ions fluorure selon la revendication 2, dans laquelle
l'oxyde complexe a une composition dans laquelle le rapport du nombre total de moles du deuxième atome métallique au nombre total de moles du premier atome métallique est de 1,4 ou plus et 1,6 ou moins, et le rapport du nombre total de moles de l'atome non métallique spécifique au nombre total de moles du premier atome métallique et du deuxième atome métallique est de 1,3 ou plus et 1,5 ou moins.

4. Batterie à ions fluorure selon la revendication 2 ou 3, dans laquelle
l'oxyde complexe comprend au moins un choisi dans le groupe constitué par Ca, Sr, Y, Ba et La en tant que premier atome métallique.

5. Batterie à ions fluorure selon l'une quelconque des revendications 2 à 4, dans laquelle
l'oxyde complexe comprend au moins un choisi dans le groupe constitué par Al, Si, Mn, Fe, Co, Ni, Cu et Ge en tant que deuxième atome métallique.

6. Batterie à ions fluorure selon l'une quelconque des revendications 2 à 5, dans laquelle
l'oxyde complexe comprend au moins Sr en tant que premier atome métallique.

7. Batterie à ions fluorure selon l'une quelconque des revendications 2 à 6, dans laquelle
l'oxyde complexe comprend au moins un choisi dans le groupe constitué par Fe et Ge en tant que deuxième atome métallique.

8. Batterie à ions fluorure selon l'une quelconque des revendications 1 à 7, dans laquelle
l'oxyde complexe a une granulométrie moyenne en volume qui est de 20 nm ou plus et 10 µm ou moins.

9. Batterie à ions fluorure selon la revendication 1, dans laquelle
l'oxyde complexe a une composition qui est représentée par la formule (1) ci-dessous
M¹_{b}M²_{c}X_{d} (1),
dans laquelle
dans la formule (1), 1,9 < b < 2,1, 2,9 < c < 3,1, et 6,8 < d < 7,2, dans laquelle
M¹ comprend au moins un choisi dans le groupe constitué par Li, Be, Na, Mg, K, Ca, Rb, Sr, Y, Cs, Ba, La, Ce, Pr, Nd, Pm, Sm, Eu, Gd, Tb, Dy, Ho, Er, Tm, Yb, Lu et Bi, dans laquelle
M² comprend au moins un choisi dans le groupe constitué par Al, Si, Sc, Ti, V, Cr, Mn, Fe, Co, Ni, Cu, Zn, Ga, Ge, Zr, Nb, Mo, Tc, Ru, Rh, Pd, Ag, Sn, Hf, Ta, W, Re, Os, Ir, Pt et Au, et dans laquelle
X comprend O et éventuellement comprend au moins un choisi dans le groupe constitué par N, F, S et Cl.

10. Batterie à ions fluorure selon la revendication 9, dans laquelle
dans la formule (1), M¹ comprend au moins un choisi dans le groupe constitué par Ca, Sr, Y, Ba et La.

11. Batterie à ions fluorure selon la revendication 9 ou 10, dans laquelle
dans la formule (1), M² comprend au moins un choisi dans le groupe constitué par Al, Si, Mn, Fe, Co, Ni, Cu et Ge.

12. Batterie à ions fluorure selon l'une quelconque des revendications 9 à 11, dans laquelle
dans la formule (1), M¹ comprend au moins Sr.

13. Batterie à ions fluorure selon l'une quelconque des revendications 9 à 12, dans laquelle
dans la formule (1), M² comprend au moins un choisi dans le groupe constitué par Fe et Ge.

14. Batterie à ions fluorure selon l'une quelconque des revendications 9 à 13, dans laquelle
l'oxyde complexe a une granulométrie moyenne en volume qui est de 20 nm ou plus et 10 µm ou moins.

15. Batterie à ions fluorure selon l'une quelconque des revendications 1 à 14, dans laquelle l'électrolyte solide comprend :
un fluorure d'un lanthanoïde, de préférence La ou Ce,
un fluorure d'un métal alcalin, de préférence Li, Na, K, Rb ou Cs, ou
un fluorure d'un métal alcalino-terreux tel que Ca, Sr ou Ba.
